# EUROPÄISCHE PATENTSCHRIFT

(11) **EP 2 442 927 B1**
(45) Veröffentlichungstag und Bekanntmachung des Hinweises auf die Patenterteilung: **03.04.2013**
(21) Anmeldenummer: 10724240.6
(22) Anmeldetag: 11.06.2010
(51) Int. Cl.: B21K 27/06, B23D 15/04, B23D 35/00

(54) **SCHERVORRICHTUNG ZUM SCHEREN VON STANGENMATERIAL UND UMFORMMASCHINE MIT EINER SCHERVORRICHTUNG ZUM SCHEREN VON STANGENMATERIAL**
SHEARING DEVICE FOR SHEARING BAR STOCK AND FORMING MACHINE HAVING A SHEARING DEVICE FOR SHEARING BAR STOCK
DISPOSITIF DE CISAILLAGE POUR CISAILLER DU MATÉRIAU EN BARRE ET MACHINE DE FAÇONNAGE DOTÉE D'UN DISPOSITIF DE CISAILLAGE POUR CISAILLER DU MATÉRIAU EN BARRE

(30) Priorität: 16.06.2009 CH 945092009
(43) Veröffentlichungstag der Anmeldung: 25.04.2012
(73) Patentinhaber: Hatebur Umformmaschinen AG, 4153 Reinach (CH)
(72) Erfinder: MATT, Andreas, 79730 Murg (DE); SCHOENENBERGER, Raymond, FR-68128 Rosenau (FR); STEMMELIN, Patrick, FR-68480 Moernach (FR); STUTZMANN, Heinz, CH-4052 Basel (CH)
(74) Vertreter: Bohest AG
(86) Internationale Anmeldenummer: PCT/CH2010/000151
(87) Internationale Veröffentlichungsnummer: WO 2010/145043

(56) Entgegenhaltungen:
- WO-A1-01/28711
- WO-A1-2006/086901
- DE-A1- 19 951 587

## Beschreibung

Die Erfindung betrifft eine Schervorrichtung zum Abscheren eines Abschnitts eines Stangenmaterials gemäss dem Oberbegriff des unabhängigen Anspruchs 1 sowie eine Umformmaschine mit einer solchen Schervorrichtung gemäss dem Oberbegriff des Anspruchs 15.

Bei Umformmaschinen mit einer oder mehreren Umformstationen wird der ersten Umformstation in der Regel ein von einem Stangenmaterial abgescherter Stangenabschnitt zur Umformung zugeführt. Die Scherung der Stange erfolgt normalerweise in einer separaten Scherstation mittels eines ortsfesten Schermessers und eines relativ dazu verschiebbaren Schermessers, das von einem Scherschlitten hin- und herbewegt wird.

Beim in der Umformmaschine zu verarbeitenden Stangenmaterial handelt es sich meistens um Stahl. Dies bedingt, dass zumindest die für die Scherwirkung massgebenden Teile der Schervorrichtung bzw. deren Schermesser aus einem hochfesten und gegenüber den üblichen Stahlsorten wesentlich härteren Material ausgebildet sind. Insbesondere bei Warmumformmaschinen, wo das Stangenmaterial auf verhältnismässig hohe Schmiedetemperaturen vorgewärmt wird, sind die Scherkanten der Schermesser einem besonders hohen Verschleiss ausgesetzt. Ebenso starkem Verschleiss unterworfen sind die Schermesser bzw. deren Scherkanten bei Schermaschinen, bei denen das zu scherende Material in unterkühltem Zustand (z.B. gekühlt mit Trockeneis oder flüssigem Stickstoff) verarbeitet wird.

Für die Ausbildung des ortsfesten Schermessers und des beweglich angeordneten Schermessers sind verschiedene Möglichkeiten bekannt.

Die Schermesser können z.B. als Ganzes aus einem Material geeigneter Härte gefertigt sein. Dies hat den Nachteil, dass die Schermesser als Ganzes ausgetauscht werden müssen, wenn ihre Scherkanten abgenutzt sind. Ausserdem ist die Herstellung solcher Schermesser relativ aufwändig und entsprechend teuer, insbesondere auch wegen der Materialkosten.

Um den Verschleiss der Scherkanten zu reduzieren ist es auch schon bekannt, die Scherkanten der Schermesser durch Aufschweissen mit Hartstoffen zu panzern. Ferner sind auch Schermesser bekannt, bei denen in einen Grundkörper ein Schereinsatz aus Hartmetall eingelötet ist. Alternativ kann auf den Grundkörper auch eine Schicht aus Stellite® (Hartlegierung auf Kobalt-Chrom-Basis, eingetragenes Warenzeichen der Firma Deloro Stellite Holdings Corporation) aufgeschweisst sein. Allen diesen bekannten Schermesser-Konzeptionen haftet jedoch der Nachteil an, dass die Schermesser als Ganzes ausgetauscht werden müssen, wenn ihre Scherkanten abgenutzt sind.

Es sind auch schon Schermesser bekannt, bei denen an einen Grundkörper ein Schereinsatz aus Stellite® direkt angeschraubt ist. Dieses Konstruktionsprinzip ist insofern vorteilhaft, als nur der Schereinsatz ausgewechselt werden muss, wenn seine Scherkante bzw. Scherkanten abgenutzt sind. Allerdings ist die Verschleissfestigkeit von Stellite® gegenüber moderneren hitzebeständigen, bruchfesten und thermoschockresistenten Hartstoffen mit einer (Rockwell-)Härte von mindestens 55 HRC geringer. Ein Beispiel für einen solchen moderneren Hartstoff ist der von der Firma Ceratizit unter der Bezeichnung CTE 50 vertriebene Werkstoff.

Das von Schermessern mit Stellite®-Scheieinsätzen bekannte Konstruktionsprinzip lässt sich nicht ohne weiteres auf solche modernere Hartstoffe anwenden, weil letztere relativ schlecht bearbeitbar und vergleichsweise spröde sind. Ein direktes Verschrauben eines Schereinsatzes aus einem solchen Hartstoff würde zum Bruch des letzteren führen. Ausserdem können aus einem solchen Hartstoff mit vernünftigem Aufwand nur verhältnismässig einfache Formkörper ohne grosse Dimensionsvariationen hergestellt werden.

Aus der DE 199 51 587 A1 ist eine Schervorrichtung zum Abscheren eines Abschnitts eines Stangenmaterials mit zwei Schermessern bekannt, von denen eines quer zur Längserstreckung des Stangenmaterials beweglich angeordnet ist. Die Schermesser weisen je einen Montageblock und einen an diesen befestigten Schereinsatz aus einem verschleissfesten Hartmaterial auf. Die Schereinsätze bestehen wenigstens teilweise aus einem hitzebeständigen, thermoschockresistenten Keramikwerkstoff.

Ausgehend von diesem Stand der Technik liegt der Erfindung die Aufgabe zugrunde, eine Schervonichtung der eingangs erwähnten Art dahingehend zu verbessern, dass einerseits die Standmenge (Anzahl möglicher Schervorgänge) der Schervorrichtung erhöht wird und anderseits ein schneller und kostengünstiger Austausch der Verschleissteile der Schervorrichtung erreicht wird. Ferner sollen durch die Erfindung die konstruktiven Voraussetzungen für eine wirtschaftlichere Auslastung einer Umformmaschine geschaffen werden.

Diese Aufgabe werden durch die erfindungsgemässe Schervorrichtung und die erfindungsgemässe Umformmaschine gelöst, wie sie im unabhängigen Anspruch 1 bzw. im Anspruch 15 definiert sind. Besonders vorteilhafte Weiterbildungen und Ausgestaltungen der Erfindung ergeben sich aus den abhängigen Ansprüchen.

Unter "Stangenmaterial" wird im vorliegenden Zusammenhang jede Materialform mit ausgeprägter Längserstreckung und beliebigem, über die Längserstreckung konstantem Querschnitt verstanden. Insbesondere fallen Stäbe, Stangen und Drähte jeglicher Abmessungen unter diese Definition. Kreisrunde Querschnitte sind die Regel, die Erfindung ist aber nicht darauf beschränkt. Die Bezeichnung "stangenförmig" ist analog zu verstehen.

Das Wesen der Erfindung besteht im Folgenden: Eine Schervorrichtung weist zwei Schermesser auf, von denen mindestens eines quer zur Längserstreckung des Stangenmaterials beweglich angeordnet ist, wobei die Schermesser je einen Montageblock und einen an diesen befestigten Schereinsatz aus einem verschleissfesten Hartmaterial aufweisen. Bei wenigstens einem der Schermesser besteht der Schereinsatz wenigstens teilweise aus einem hitzebeständigen, thermoschockresistenten Hartstoff und weist im Wesentlichen die Form einer zylindrischen Halbschale auf. Dieser Schereinsatz ist in einer formlich angepassten Aufnahmemulde des Montageblocks angeordnet und mittels verschraubter Spannklötze lösbar am Montageblock festgeklemmt. Eine Umformmaschine umfasst eine solche Schervorrichtung, eine Umformstation zur Umformung des abgescherten Stangenmaterialabschnitts und eine Transportvorrichtung für das Stangenmaterial.

Durch den Einsatz von hitzebeständigem, thermoschockresistentem Hartstoff werden gegenüber herkömmlichen Lösungen erhöhte Standmengen erreicht. Durch die Einspannung des Schereinsatzes mittels der Spannklötze ist eine einfache Befestigung des Schereinsatzes gewährleistet und die Gestalt des Schereinsatzes kann ausreichend einfach gehalten werden, so dass er gut aus dem Hartstoff hergestellt werden kann. Wenn der Schereinsatz abgenützt ist, lässt er sich auf einfache Weise um 180° drehen, so dass seine Rückseite zum Scheren genutzt werden kann, oder ganz ersetzen.

Gemäss einer bevorzugten Ausführungsform der Erfindung ist ein Schermesser ortsfest angeordnet und das andere Schermesser beweglich angetrieben. Da letzteres in der Regel parallel zur Längsrichtung des abzuscherenden Stangenmaterials deutlich kürzer ist als das ortsfeste Schermesser, ist die Befestigung des Schereinsatzes bei diesem problematischer. Gemäss einer vorteilhaften Ausführungsform der Erfindung ist deshalb insbesondere das bewegliche Schermesser mit dem mittels Spannklötzen festgeklemmten Schereinsatz versehen. Alternativ kann aber auch das ortsfeste Scherinesser mit dem mittels Spannklötzen festgeklemmten Schereinsatz versehen sein. Besonders vorteilhaft sind beide Schermesser diesbezüglich in analoger Weise ausgebildet, d.h. an beiden Schermessern ist der Schereinsatz mittels Spannklötzen lösbar festgeklemmte

Vorteilhafterweise ist der Schereinsatz mit Hilfe der Spannklötze vorgespannt, was sich günstig auf die Bruchfestigkeit des Schereinsatzes auswirkt.

Zweckmässigerweise ist der Schereinsatz durch einen am Rand der Aufnahmemulde ausgebildeten Bund gegen Verschiebung in einer axialen Richtung während des Schervorgangs gesichert. Ebenso ist es vorteilhaft, die Spannklötze insbesondere durch eine Nut/Feder-Kombination gegen axiale Verschiebung zu sichern.

Der Schereinsatz besteht entweder als Ganzer oder wenigstens im Bereich seiner Scherkante aus dem Hartstoff. Der Schereinsatz kann auch oberflächenbehandelt, insbesondere oberflächenbeschichtet sein.

Der Hartstoff weist vorzugsweise eine Rockwell-Härte von mindestens 55 HRC auf und ist gemäss einer bevorzugten Ausführungsform hitzebeständig bis mindestens 1300° C. Ganz besonders bevorzugt kommt ein Hartstoff zum Einsatz, der einem Abschreckvorgang mittels eines Kühlmittels von Raumtemperatur oder darunter widersteht.

Vorteilhafterweise kann der Hartstoff ein gesintertes Hartmetall vorzugsweise aus Wolframcarbid-Kobalt-Sinterwerkstoffen, vorteilhafterweise mit Zusätzen zur Erhöhung der Wärmebeständigkeit und Thermoschockfestigkeit, sein. Alternativ kann der Hartstoff auch ein nichtmetallischer Hartstoff, z.B. Keramik, mit hoher Wärmebeständigkeit und Thermoschockfestigkeit sein.

Im Folgenden werden die erfindungsgemässe Schervorrichtung und die erfindungsgemässe Umformmaschine anhand eines in der Zeichnung dargestellten Ausführungsbeispiels detaillierter beschrieben. Es zeigen:
- Fig. 1 -: eine schematische Darstellung der wesentlichen Teile eines Ausführungsbeispiels der erfindungsgemässen, mit einer Schervorrichtung ausgestatteten Umformmaschine;
- Fig. 2 und 3 -: zwei Schrägansichten aus unterschiedlichen Richtungen der beiden Schermesser der erfindungsgemässen Schervorrichtung der Umformmaschine;
- Fig. 4-: eine Schrägansicht des beweglichen Schermessers der Schervorrichtung und
- Fig. 5 -: eine Explosionsansicht des beweglichen Schermessers von Fig. 4.

Für die gesamte nachstehende Beschreibung gilt die folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung im Zusammenhang mit den übrigen Figuren verwiesen.

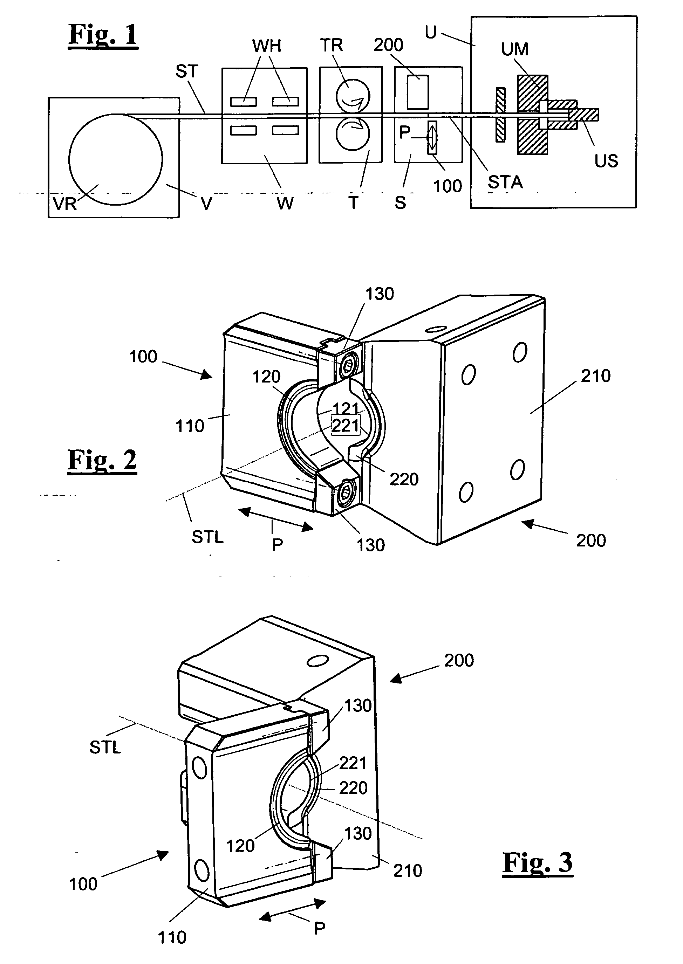

Die erfindungsgemässe Umformmaschine ist als Warmumformmaschine ausgelegt und umfasst gemäss Fig. 1 ein Vorratsmagazin V für stangenförmiges Material ST, eine Vorwärmstation W für das Stangenmaterial ST, eine Transportvorrichtung T zum Vorschub des Stangenmaterials ST, eine Schervorrichtung S zum Abscheren eines Abschnitts des Stangenmaterials ST und eine Umformstation U zur Umformung des Stangenmaterialabschnitts STA in eine gewünschte Gestalt. Gegebenenfalls können auch zwei oder mehrere Umformstationen vorgesehen sein, die der Stangenmaterialabschnitt nacheinander durchläuft und in denen die Umformung in zwei bzw. mehreren Teilschritten erfolgt.

Im Vorratsmagazin V ist das Stangenmaterial ST beispielsweise auf einer Vorratsrolle VR aufgewickelt. Die Vorwärmstation W enthält eine oder mehrere Heizungen WH, die das Stangenmaterial auf die erforderliche Betriebstemperatur aufwärmen. Die Transportvorrichtung T umfasst typischerweise motorisch angetriebene Transportrollen TR. Die Schervorrichtung S umfasst zwei Schermesser 100 und 200, die relativ zu einander in einer Ebene quer zur Längsrichtung des Stangenmaterials ST beweglich sind. Typischerweise ist eines der Schermesser 200 feststehend angeordnet und das andere Schermesser 100 auf einem nicht dargestellten, angetriebenen Schlitten gelagert. Die Verstellbarkeit des Schermessers 100 ist in den Figuren 1-3 durch einen Pfeil P symbolisiert. Die Umformstation U umfasst typischerweise eine Matrize UM und einen Stempel US.

Die Erfindung ist nicht auf Warmumformmaschinen beschränkt. Im Falle einer Kaltumformmaschine würde die Vorwärmstation W entfallen. Falls der gescherte Abschnitt nicht weiter umgeformt wird, entfällt auch die Umformstation U.

Soweit entspricht die erfindungsgemässe Umformmaschine und auch die Schervorrichtung selbst dem Stand der Technik, wie er z.B. in WO 2001/028711 Al und WO 2006/086901 A1 sowie in den in den zugehörigen Recherchenberichten angeführten Dokumenten detailliert beschrieben ist. Der Fachmann bedarf daher diesbezüglich keiner näheren Erläuterung.

Der wesentlichste Unterschied der erfindungsgemässen Umformmaschine zu den Umformmaschinen des Standes der Technik besteht in der speziellen Ausbildung der Schervorrichtung S. Darauf wird im Folgenden anhand der Figuren 2-5 näher eingegangen.

Wie schon erwähnt, umfasst die erfindungsgemässe Schervorrichtung ein ortsfestes Schermesser 200 und ein bewegliches Schermesser 100, zwischen denen im Betrieb das zu scherende Stangenmaterial ST durchgeführt wird. Letzteres ist in den Figuren 2 und 3 durch eine strichpunktierte Linie STL angedeutet. Das bewegliche Schermesser 100 ist in an sich bekannter Weise auf einem nicht dargestellten, angetriebenen Schlitten angeordnet, welcher durch den Doppelpfeil P symbolisiert ist. Die Bewegungsrichtung des Schermessers 100 verläuft in einer zur Längserstreckung des Stangenmaterials ST senkrechten Ebene.

Das im Folgenden als Festmesser bezeichnete ortsfeste Schermesser 200 umfasst einen Montageblock 210 aus Werkzeugstahl und einen daran befestigten Schereinsatz 220 aus einem besonders harten und verschleissfesten Hartstoff, beispielsweise einem gesinterten Hartmetall. Der Schereinsatz 220 hat im Wesentlichen die Form einer zylindrischen Halbschale und ist fest oder lösbar mit dem Montageblock 210 verbunden. Das Festmesser 200 bzw. sein Schereinsatz 220 ist so ausgerichtet; dass die nicht dargestellte Zylinderachse des letzteren parallel zur durch die Linie STL symbolisierten Längserstreckung des zu scherenden Stangenmaterials ST verläuft. Die kreisbogenförmige Kante 221 zwischen der ebenen Stirnfläche und der zylindrischen Innenfläche des Schereinsatzes 220 bildet die für den Schervorgang wirksame Scherkante des Festmessers 200. Die Stirnfläche des Schereinsatzes 220 ist radial ausserhalb der Scherkante 221 axial etwas einwärts versetzt, d.h. die Scherkante 221 steht etwas über die übrige Stirnfläche hinaus. Ausserdem stehen die Stirnfläche und die Scherkante 221 des Schereinsatzes 220 auch über den Montageblock 210 hinaus vor. Auf diese Weise wird im Betrieb Reibung mit dem zu scherenden Stangenmaterial vermieden.

Der hitzebeständige, bruchfeste und thermoschockresistente Hartstoff weist vorzugsweise eine Rockwell-Härte von mindestens 55 HRC auf und ist gemäss einer bevorzugten Ausführungsform hitzebeständig bis zu etwa 1300° C. Ganz besonders bevorzugt kommt ein Hartstoff zum Einsatz, der einem Abschreckvorgang mittels eines Kühlmittels von Raumtemperatur oder darunter widersteht.

Vorteilhafterweise kann der Hartstoff ein gesintertes Hartmetall vorzugsweise aus Wolframcarbid-Kobalt-Sinterwerkstoffen, vorteilhafterweise mit Zusätzen zur Erhöhung der Wärmebeständigkeit und Thermoschockfestigkeit sein.

Der Hartstoff auch ein nichtmetallischer Hartstoff, z.B. Keramik, mit hoher Wärmebeständigkeit und Thermoschockfestigkeit sein.

Ein geeigneter Hartstoff ist z.B. der von der Firma Ceratizit vertriebene Werkstoff CTE 50.

Der Schereinsatz besteht entweder als Ganzer oder wenigstens im Bereich seiner Scherkante aus dem Hartstoff. Der Schereinsatz kann auch oberflächenbehandelt, insbesondere oberflächenbeschichtet sein.

Das im Folgenden als Flachmesser bezeichnete bewegliche Schermesser 100 umfasst einen im Vergleich zum Montageblock 210 des Festmessers 200 schmäleren Montageblock 110 aus Werkzeugstahl und einen darauf lösbar befestigten Schereinsatz 120 aus dem genannten Hartstoff. Der Schereinsatz 120 weist wie der Schereinsatz 220 des Festmessers im Wesentlichen die Form einer zylindrischen Halbschale auf. Das Flachmesser 100 bzw. sein Schereinsatz 120 ist so ausgerichtet, dass die nicht dargestellte Zylinderachse des letzteren parallel zur durch die Linie STL symbolisierten Längserstreckung des zu scherenden Stangenmaterials ST verläuft. Die kreisbogenförmige Kante 121 zwischen der ebenen Stirnfläche und der zylindrischen Innenfläche des Schereinsatzes 120 bildet die für den Schervorgang wirksame Scherkante des Flachmessers 200. Die Stirnfläche des Schereinsatzes 120 ist radial ausserhalb der Scherkante 121 axial etwas einwärts versetzt, d.h. die Scherkante 121 steht etwas über die übrige Stirnfläche hinaus. Ausserdem stehen die Stirnfläche und die Scherkante 121 des Schereinsatzes 120 auch über den Montageblock 110 hinaus vor. Auf diese Weise wird im Betrieb Reibung mit dem zu scherenden Stangenmaterial vermieden.

Die kreisbogenförmigen Scherkanten 121 und 221 des Flachmessers 100 bzw. des Festmessers 200 liegen axial nahe beieinander in zur Längserstreckung des zu scherenden Stangenmaterials senkrechten Ebenen, wobei der axiale Abstand zwischen den beiden Scherkanten ausreichend gross ist, dass sich die beiden Schereinsätze 121 und 221 bei der Bewegung des Flachmessers nicht berühren.

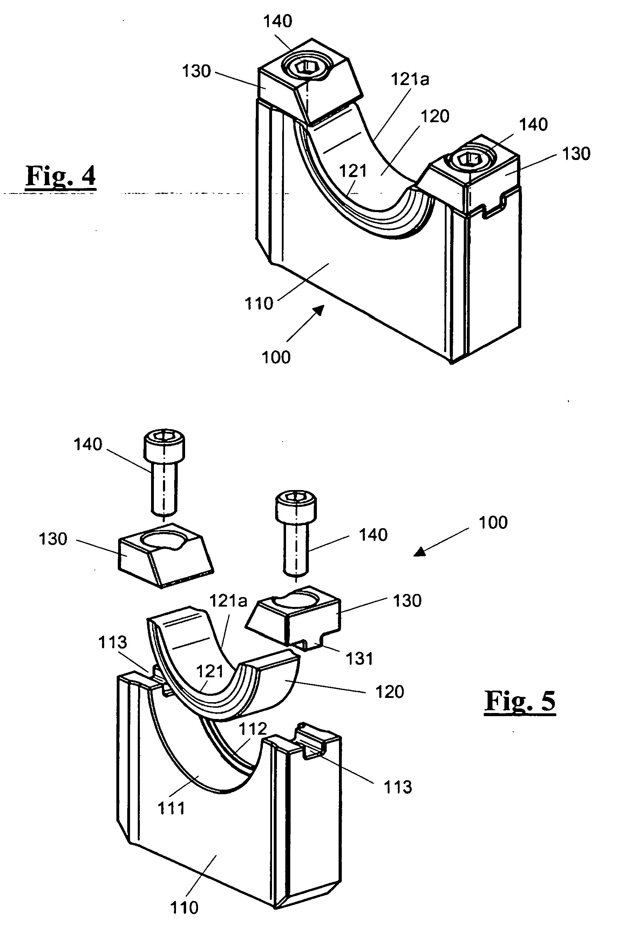

Die Figuren 4 und 5 zeigen den Aufbau des Flachmessers 100 im Detail. Der Montageblock 110 weist eine zylindrische, an die äussere Zylinderfläche des Schereinsatzes 120 formlich angepasste Aufnahmemulde 111 auf, in welche der Schereinsatz 120 eingesetzt ist. Auf der dem Festmesser 200 abgewandten Seite ist die Aufnahmemulde 111 mit einem Bund 112 versehen, gegen welchen sich der Schereinsatz 120 axial abstützt, so dass er sich während des Schervorgangs nicht axial verschieben kann. Der Schereinsatz 120 hat die verhältnismässig einfache Form einer zylindrischen Halbschale, die sich gut aus dem Hartstoff, z.B. gesintertem Hartmetall, herstellen lässt. Der Schereinsatz 120 ist mittels zweier Spannklötze 130 in der Aufnahmemulde 111 festgehalten. Die Spannklötze 130 sind mittels je einer Schraube 140 mit dem Montageblock 110 verschraubt. Spannklötze und Schrauben bestehen aus Werkzeugstahl. Im Montageblock 110 ist beidseits der Aufnahmemulde 111 je eine Nut 113 vorgesehen, in welche je eine an den Spannblöcken 130 ausgebildete gegengleiche Feder 131 eingreift. Diese Nut/Feder-Kombination sichert die Spannklötze 130 gegen Bewegung in Richtung der Achse des Schereinsatzes 120. Je nach axialer Dimension des Schereinsatzes 120 können zur Befestigung der Spannklötze 130 auch je zwei oder mehrere Schrauben vorgesehen sein. Indem der Schereinsatz 120 geringfügig in Richtung Spannklötze über die Kontur des Montageblocks 110 hinausragt, kann durch die verschraubten Spannklötze 130 eine gewisse Vorspannung des Schereinsatzes 120 erzeugt werden, wodurch seine Bruchfestigkeit erhöht wird. Durch die Einspannung des Schereinsatzes 120 mittels der Spannklötze 130 wird eine einfache Befestigung des Schereinsatzes erreicht und die Gestalt des Schereinsatzes kann einfach gehalten werden, so dass er gut aus dem Hartstoff hergestellt werden kann und keine unnötigen Kanten und Übergänge aufweist, die die Bruchgefahr unter Belastung erhöhen würden.

Die lösbare Einspannung des Schereinsatzes 120 im Montageblock 110 des Flachmessers 100 hat den Vorteil, dass nach Ablauf der Standzeit, wenn also der Schereinsatz abgenützt ist, nur der Schereinsatz 120 selbst ausgetauscht zu werden braucht, nicht jedoch das gesamte Schermesser. Ausserdem kann der Schereinsatz 120 (in an sich bekannter Weise) um 180° gedreht werden, so dass seine hintere kreisbogenförmige Kante 121 a zur aktiven Scherkante wird. Auf diese Weise lässt sich die Standzeit des Schermessers mit geringstem Aufwand verdoppeln.

Beim vorstehend beschriebenen Ausführungsbeispiel der erfindungsgemässen Schervorrichtung ist lediglich das bewegliche Flachmesser 100 mit einem eingespannten Schereinsatz 120 ausgebildet, während das ortsfeste Festmesser 200 konventionell ausgebildet ist oder die Befestigung des Schereinsatzes auf andere Weise gelöst ist. Die umgekehrte Anordnung ist jedoch ebenfalls möglich. Beim Flachmesser 100 ist die erfindungsgemässe Einspannung des Schereinsatzes mittels der Spannklötze ganz besonders wichtig, weil dort für eine andere Befestigung des Schereinsatzes kein ausreichender Platz zur Verfügung stünde. Beim vergleichsweise grösseren Festmesser stehen für die Befestigung des Schereinsatzes mehr Optionen zur Verfügung. Ganz besonders vorteilhaft ist es, beide Schermesser in analoger Weise mit einem eingespannten Schereinsatz aus Hartstoff auszubilden.

## Patentansprüche

1. Schervorrichtung zum Abscheren eines Abschnitts eines Stangenmaterials (ST) mit zwei Schermessern (100, 200), von denen mindestens eines (100) quer zur Längserstreckung des Stangenmaterials (ST) beweglich angeordnet ist, wobei die Schermesser (100, 200) je einen Montageblock (110, 210) und einen an diesen befestigten Schereinsatz (120, 220) aus einem verschleissfesten Hartmaterial aufweisen, wobei bei wenigstens einem (100) der Schermesser der Schereinsatz (120) wenigstens teilweise aus einem hitzebeständigen, thermoschockresistenten Hartstoff besteht, **dadurch gekennzeichnet, dass** der wenigstens teilweise aus einem hitzebeständigen, thermoschockresistenten Hartstoff bestehende Schereinsatz (120) im Wesentlichen die Form einer zylindrischen Halbschale aufweist und dass dieser Schereinsatz (120) in einer formlich angepassten Aufnahmemulde (111) des Montageblocks (110) angeordnet und mittels verschraubter Spannklötze (130) lösbar am Montageblock (110) festgeklemmt ist.

2. Schervorrichtung, nach Anspruch 1, **dadurch gekennzeichnet, dass** der wenigstens teilweise aus einem hitzebeständigen, thermoschockresistenten Hartstoff bestehende Schereinsatz (120) geringfügig aus der Aufnahmemulde (111) herausragt und durch die Spannklötze (130) vorgespannt ist.

3. Schervorrichtung nach Anspruch 1 oder 2, **dadurch gekennzeichnet, dass** die Aufnahmemulde (111) des Montageblocks (110) einen Bund (112) aufweist, der den wenigstens teilweise aus einem hitzebeständigen, thermoschockresistenten Hartstoff bestehenden Schereinsatz (120) gegen Verschiebung in einer axialen Richtung sichert.

4. Schervorrichtung nach einem der Ansprüche 1 bis 3, **dadurch gekennzeichnet, dass** die Spannklötze (130) gegen Verschiebung in axialer Richtung des wenigstens teilweise aus einem hitzebeständigen, thermoschockresistenten Hartstoff bestehenden Schereinsatzes (120) gesichert sind, insbesondere durch eine Nut/Feder-Kombination (113, 131).

5. Schervorrichtung nach einem der Ansprüche 1 bis 4, **dadurch gekennzeichnet, dass** das mit dem mittels Spannklötzen (130) eingespannten Schereinsatz (120) versehene Schermesser das beweglich angeordnete Schermesser (100) ist.

6. Schervorrichtung nach einem der Ansprüche 1 bis 5, **dadurch gekennzeichnet, dass** das mit dem mittels Spannklötzen eingespannten Schereinsatz versehene Schermesser ortsfest angeordnet ist.

7. Schervorrichtung nach einem der Ansprüche 1 bis 6, **dadurch gekennzeichnet, dass** bei beiden Schermessern (100, 200) die Schereinsätze (120, 220) wenigstens teilweise aus einem hitzebeständigen, thermoschockresistenten Hartstoff bestehen und im Wesentlichen die Form einer zylindrischen Halbschale aufweisen und dass die Schereinsätze (120, 220) bei beiden Schermessern (100, 200) mittels Spannklötzen lösbar an den Montageblöcken (110, 210) festgeklemmt sind.

8. Schervorrichtung nach einem der vorangehenden Ansprüche, **dadurch gekennzeichnet, dass** der Hartstoff eine Rockwell-Härte von mindestens 55 HRC aufweist.

9. Schervorrichtung nach einem der vorangehenden Ansprüche, **dadurch gekennzeichnet, dass** der Hartstoff eine Temperaturfestigkeit bis mindestens 1300° C aufweist.

10. Schervorrichtung nach einem der vorangehenden Ansprüche, **dadurch gekennzeichnet, dass** der Hartstoff einem Abschreckvorgang mit einem Kühlmittel von Raumtemperatur oder kälter widersteht.

11. Schervorrichtung nach einem der vorangehenden Ansprüche, **dadurch gekennzeichnet, dass** der Hartstoff ein gesintertes Hartmetall ist.

12. Schervorrichtung nach einem der Ansprüche 1 bis 10, **dadurch gekennzeichnet, dass** der Hartstoff ein nichtmetallischer Hartstoff, vorzugsweise Keramik, ist.

13. Schervorrichtung nach einem der vorangehenden Ansprüche, **dadurch gekennzeichnet, dass** der Schereinsatz (120) bzw. die Schereinsätze (120, 220) wenigstens im Bereich der Schneidkante aus dem Hartstoff besteht bzw. bestehen.

14. Schervorrichtung nach einem der vorangehenden Ansprüche, **dadurch gekennzeichnet, dass** der Schereinsatz (120) bzw. die Schereinsätze (120, 220) oberflächenbehandelt, insbesondere oberflächenbeschichtet, ist bzw. sind.

15. Umformmaschine mit einer Schervorrichtung (S) zum Abscheren eines Abschnitts eines Stangenmaterials (ST), mit mindestens einer Umformstation (U) zur Umformung des abgescherten Stangenmaterialabschnitts (STA) und mit einer Transportvorrichtung (T) für das Stangenmaterial (ST), **dadurch gekennzeichnet, dass** die Schervorrichtung (S) gemäss einem der vorstehenden Ansprüche ausgebildet ist.

## Claims

1. Shearing device for shearing off a section of a bar stock (ST) with two shearing blades (100, 200), of which at least one (100) is movably transverse to the longitudinal extension of the bar stock (ST), wherein the shearing blades (100, 200) each have an assembly block (110, 210) and a shearing insert (120, 220) attached to this, which is made of a wear-resistant hard material, wherein for at least one (100) of the shearing blades, the shearing insert (120) is at least partially made of a heat-resistant, thermal shock-resistant hard material, **characterised in that** the shearing insert (120) at least partially made of a heat-resistant, thermal shock-resistant hard material has essentially the form of a cylindrical half-shell, and that this shearing insert (120) is arranged in a reception recess (111) of the assembly block (110), which is adapted in shape, and is detachably clamped to the assembly block (110) by means of screwed clamping blocks (130).

2. Shearing device according to claim 1, **characterised in that** the shearing insert (120) at least partially made of a heat-resistant, thermal shock-resistant hard material slightly protrudes from the reception recess (111) and is pretensioned by the clamping blocks (130).

3. Shearing device according to claim 1 or 2, **characterised in that** the reception recess (111) of the assembly block (110) has a collar (112), which secures the shearing insert (120) at least partially made of a heat-resistant, thermal shock-resistant hard material against displacement in an axial direction.

4. Shearing device according to any one of claims 1 to 3, **characterised in that** the clamping blocks (130) are secured against displacement in the axial direction of the shearing insert (120) at least partially made of a heat-resistant, thermal shock-resistant hard material, in particular by a groove/tongue combination (113, 131).

5. Shearing device according to any one of claims 1 to 4, **characterised in that** the shearing blade provided with the shearing insert (120), which is mounted by means of clamping blocks (130), is the shearing blade (100) which is movably.

6. Shearing device according to any one of claims 1 to 5, **characterised in that** the shearing blade provided with the shearing insert, which is mounted by means of clamping blocks, is fixed in position.

7. Shearing device according to any one of claims 1 to 6, **characterised in that** for the two shearing blades (100, 200), the shearing inserts (120, 220) are at least partially made of a heat-resistant, thermal shock-resistant hard material and essentially have the shape of a cylindrical half-shell, and that the shearing inserts (120, 220) for both shearing blades (100, 200) are detachably clamped by means of clamping blocks on the assembly blocks (110, 210).

8. Shearing device according to any one of the preceding claims, **characterised in that** the hard material has a Rockwell hardness of at least 55 HRC.

9. Shearing device according to any one of the preceding claims, **characterised in that** the hard material has a temperature resistance up to at least 1300 °C.

10. Shearing device according to any one of the preceding claims, **characterised in that** the hard material withstands a quenching process with a coolant at room temperature or colder.

11. Shearing device according to any one of the preceding claims, **characterised in that** the hard material is a sintered hard metal.

12. Shearing device according to any one of claims 1 to 10, **characterised in that** the hard material is a non-metallic hard material, preferably ceramic.

13. Shearing device according to any one of the preceding claims, **characterised in that** the shearing insert (120) or shearing inserts (120, 220), is or are made of the hard material at least in the region of the cutting edge.

14. Shearing device according to any one of the preceding claims, **characterised in that** the shearing insert (120) or shearing inserts (120, 220) is or are surface-treated, in particular surface-coated.

15. Forming machine with a shearing device (S) to shear off a section of a bar stock (ST), with at least one forming station (U) for forming the sheared off bar stock section (STA) and with a transport device (T) for the bar stock (ST), **characterised in that** the shearing device (S) is designed according to one of the preceding claims.

## Revendications

1. Dispositif de cisaillage pour cisailler un tronçon d'un matériau en barre (ST) avec deux couteaux de cisaillage (100, 200) parmi lesquels au moins un (100) est agencé déplaçable transversalement à l'extension longitudinale du matériau en barre (ST), les couteaux de cisaillage (100, 200) comprenant chacun un bloc de montage (110, 210) et un insert de cisaillage (120, 220) fixé sur celui-ci, en un matériau dur résistant à l'usure, et dans au moins un (100) des couteaux de cisaillage l'insert de cisaillage (120) est au moins partiellement en un matériau dur résistant à la chaleur et résistant aux chocs thermiques,
**caractérisé en ce que** ledit insert de cisaillage (120) constitué au moins partiellement d'un matériau dur résistant à la chaleur et résistant aux chocs thermiques présente essentiellement la forme d'une demi-coque cylindrique, et **en ce que** cet insert de cisaillage (120) est agencé dans un creux de réception (111), de forme adaptée, du bloc de montage (110), et est fermement coincé au moyen de blocs de serrage (130) vissés de manière libérable sur le bloc de montage (110).

2. Dispositif de cisaillage selon la revendication 1, **caractérisé en ce que** l'insert de cisaillage (120) constitué au moins partiellement d'un matériau dur résistant à la chaleur et résistant aux chocs thermiques dépasse légèrement hors du creux de réception (111) et est précontraint par les blocs de serrage (130).

3. Dispositif de cisaillage selon la revendication 1 ou 2, **caractérisé en ce que** le creux de réception (111) du bloc de montage (110) comporte une collerette (112), qui bloque l'insert de cisaillage (120) constitué au moins partiellement d'un matériau dur résistant à la chaleur et résistant aux chocs thermiques à l'encontre d'un déplacement dans une direction axiale.

4. Dispositif de cisaillage selon l'une des revendications 1 à 3, **caractérisé en ce que** les blocs de serrage (130) sont bloqués à l'encontre du déplacement en direction axiale de l'insert de cisaillage (120) constitué au moins partiellement d'un matériau dur résistant à la chaleur et résistant aux chocs thermiques, en particulier par une combinaison à rainure-et-languette (113, 131).

5. Dispositif de cisaillage selon l'une des revendications 1 à 4, **caractérisé en ce que** le couteau de cisaillage doté de l'insert de cisaillage (120) enserré au moyen des blocs de serrage (130) est le couteau de cisaillage (100) agencé mobile.

6. Dispositif de cisaillage selon l'une des revendications 1 à 5, **caractérisé en ce que** le couteau de cisaillage doté de l'insert de cisaillage (120) enserré au moyen des blocs de serrage est agencé stationnaire.

7. Dispositif de cisaillage selon l'une des revendications 1 à 6, **caractérisé en ce que** dans les deux couteaux de cisaillage (100, 200) les inserts de cisaillage (120, 220) sont constitués au moins partiellement d'un matériau dur résistant à la chaleur et résistant aux chocs thermiques et présentent sensiblement la forme d'une demi-coque cylindrique, et **en ce que** les inserts de cisaillage (120, 220) des deux couteaux de cisaillage (100, 200) sont fermement coincés au moyen de blocs de serrage de manière détachable sur les blocs de montage (110, 210).

8. Dispositif de cisaillage selon l'une des revendications précédentes, **caractérisé en ce que** le matériau dur présente une dureté Rockwell d'au moins 55 HRC.

9. Dispositif de cisaillage selon l'une des revendications précédentes, **caractérisé en ce que** le matériau dur présente une résistance à la température jusqu'à au moins 1300° C.

10. Dispositif de cisaillage selon l'une des revendications précédentes, **caractérisé en ce que** le matériau dur résiste à une opération de trempe avec un agent réfrigérant à température ambiante ou inférieure.

11. Dispositif de cisaillage selon l'une des revendications précédentes, **caractérisé en ce que** le matériau dur est un métal dur fritté.

12. Dispositif de cisaillage selon l'une des revendications 1 à 10, **caractérisé en ce que** le matériau dur est un matériau dur non métallique, de préférence de la céramique.

13. Dispositif de cisaillage selon l'une des revendications précédentes, **caractérisé en ce que** l'insert de cisaillage (120) ou respectivement les inserts de cisaillage (120, 220) est constitué/sont constitués du matériau dur au moins dans la région de l'arête de coupe.

14. Dispositif de cisaillage selon l'une des revendications précédentes, **caractérisé en ce que** l'insert de cisaillage (120) ou respectivement les inserts de cisaillage (120, 220) est/sont traité(s) en surface, en particulier revêtu(s) en surface.

15. Machine de mise en forme comprenant un dispositif de cisaillage (S) pour cisailler un tronçon d'un matériau en barre (ST), comprenant au moins une station de mise en forme (U) pour la mise en forme du tronçon de matériau en barre cisaillé (STA) et comprenant un dispositif de transport (T) pour le matériau en barre (ST), **caractérisé en ce que** le dispositif de cisaillage (S) est réalisé conformément à l'une des revendications précédentes.
